# EUROPEAN PATENT APPLICATION

(11) **EP 0 639 344 A1**
(43) Date of publication of application: **22.02.1995**
(21) Application number: 93202432.6
(22) Date of filing: 18.08.1993
(51) Int. Cl.: A47J 27/14, A47J 27/00

(54) **An apparatus for facilitating the shaking of a wok to toss the food stuff**

(71) Applicant: Hu, Lungchiang, Taichung (TW)
(72) Inventor: Hu, Lungchiang, Taichung (TW)
(74) Representative: Fieret, Johannes, Ir.

(57) **Abstract**

An apparatus for facilitating the shaking of a wok to toss the food stuff which mainly comprises a disposing frame (10), a wok (20) and shake facilitating means (30). The disposing frame (10) mainly comprises a main body (12), positioning means and connecting means for positioning the main body (12) and connecting the wok (20) and the shake facilitating means (30) to the disposing frame (10). The shake facilitating means (30) comprises at least one elastic element. The elastic elements can be replaced by a hydraulic system. With the elasticity or the hydraulic mechanism, the shake facilitating means (30) ensure the easy shaking of the wok (20) to toss the food stuff.

## Description

### BACKGROUND OF THE INVENTION

The wok is a main cooker used in Chinese food cooking. The shaking, swaying and rocking of a wok to toss the food stuff when in cooking is a very important skill in Chinese cookery. The purpose of the shaking of the wok to toss the food stuff is to cook the food stuff in proportional temperature and to rapidly mix the seasons, sauce and condiments with the food stuff in a well-distributed condition. However, the cooker applied in big restaurants, camps or factories is usually big and heavy, and that exhausts a cook's strength or make the shaking of a wok to be impossible.

### SUMMARY OF THE INVENTION

The present invention has as a main objective to provide an apparatus for facilitating the shaking of a wok to toss the food stuff which mainly comprises a disposing frame, a wok and shake facilitating means.

The disposing frame mainly comprises a main body, positioning means and connecting means for positioning the main body and connecting the wok and the shake facilitating means to the disposing frame. The shake facilitating means comprises at least one elastic element. The elastic elements can replaced with a hydraulic system. With the elasticity or the hrdraulic mechanism, the shake facilitating means ensure the easy shaking of a wok to toss the food stuff.

The disposing frame has a handle portion which extends to connect to a main body. The main body has four metal plates curving downwards to correspond to wok bottom. Opposite from the metal plate which the handle portion is connected to, the main body has a balancing bar extending to connect to a balancing plate and a counterweight. Two supporting posts have a first end extending upwards from a work bench to have a second end to connect to the bottom centers of the metal plates which are adjacent to the metal plates connected with the handle portion and balancing bar, respectively. The supporting posts have two magnetic means respectively attaching to their second ends for attracting to the wok bottom.

The balancing bar has a first end connecting to the main body and extending to have a second end to connect to the counterweight. Between the first end and second end of the balancing bar, two struts have a first end extending upwards from the work bench over the balancing bar to connect to the ends balancing plate. The shake facilitating means is a recoil spring which has one end connecting to the center of the balancing plate, and the other end connecting to the balancing bar. The recoil spring ensures the easy shaking of a wok to toss the food stuff.

The wok and shake facilitating means can be replaced with an electromagnetic one and a hydraulic syatem, respectively. Another arrangements of the disposing frame are described hereinafter.

### BRIEF DESCRIPTION OF THE INVENTION

The invention is hereinafter described with reference to the accompanying drawings in which:
- FIG. 1: is a right side view of the embodiment of the present invention;
- FIG. 2: is a bottom view of the embodiment of the present invention;
- FIG. 3: is a right side view of a hydraulic mechanism which is the recoil spring in FIG. 1;
- FIG. 4: is a schematic drawing of another arrangement of the present invention;
- FIG. 5: is a top view of the aforesaid arrangement of the present invention;
- FIG.: 6 is a schematic drawing illustrating another arrangement of the connected portion of a wok and a main body;
- FIG. 6A: is an enlarged view of a positioning clip which is shown in A section of FIG. 6;
- FIG. 7: shows an electromagnetic wok disposed on the main body;
- FIG. 8: is a bottom view of FIG. 7;
- FIG. 9: is another arrangement of the present invention;
- FIG. 10: shows another arrangement of the present invention.

### DETAILED DESCRIPTION OF THE INVENTION

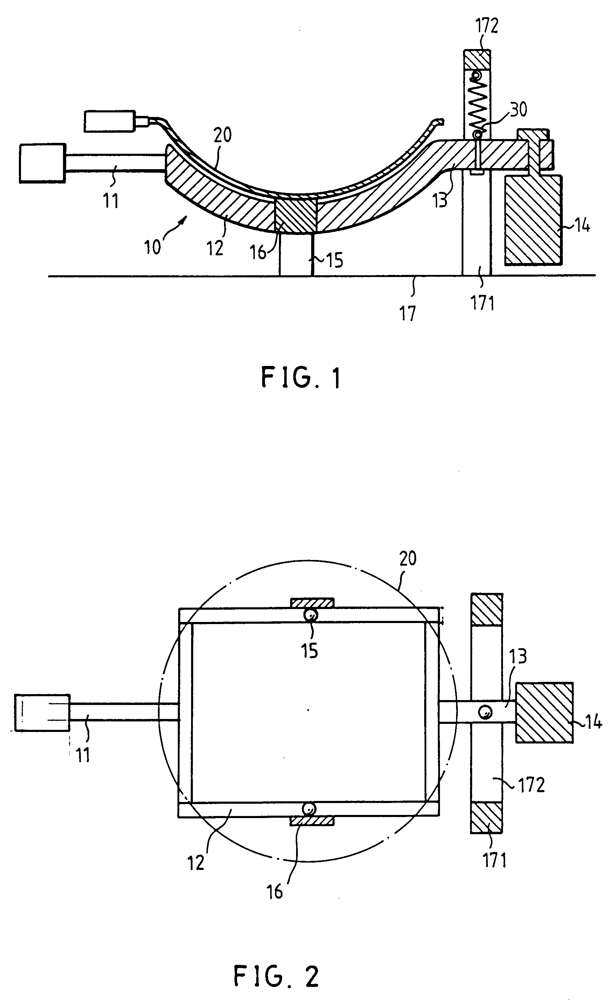

Referring to FIG. 1, an apparatus for facilitating the shake of a wok to toss the food stuff mainly comprises a disposing frame 10, a wok 20 and shake facilitating means 30.

The disposing frame 10 has an end to terminate a handle portion 11 which extends to connect to a main body 12. The main body 12 has four metal plates curving downwards to correspond to the bottom of the wok 20. FIG. 2 shows that the four metal plates of main body 12 in this embodiment are rectangularly connected and have a bottom. Opposite from the metal plate which the handle portion 11 is connected to, the main body 12 has a balancing bar 13 extending to connect to a balancing plate 172 and a counterweight 14. Two supporting posts 15 have a first end extending upwards from a work bench 17 to have a second end to connect to the bottom centers of the metal plates of the main body 12 which are adjacent to the metal plates connected with the handle portion 11 and balancing bar 13, respectively. The supporting posts 15 have two magnetic means 16 respectively attaching to their second ends for attracting to the bottom of the wok 20.

The balancing bar 13 has a first end connecting to the main body 12 and extending to have a second end to connect to the counterweight 14. The balancing plate 172 has a center and two ends. Between the first end and second end of the balancing bar 13, two struts 171 have a first end extending upwards from the work bench 17 over the balancing bar 13 to connect to the ends balancing plate 172. In this embodiment, the shake facilitating means 30 is a recoil spring which has one end connecting to the center of the balancing plate 172, and the other end connecting to the balancing bar 13. The recoil spring 30 ensures the easy shaking of the wok 20 to toss the food stuff by its elasticity.

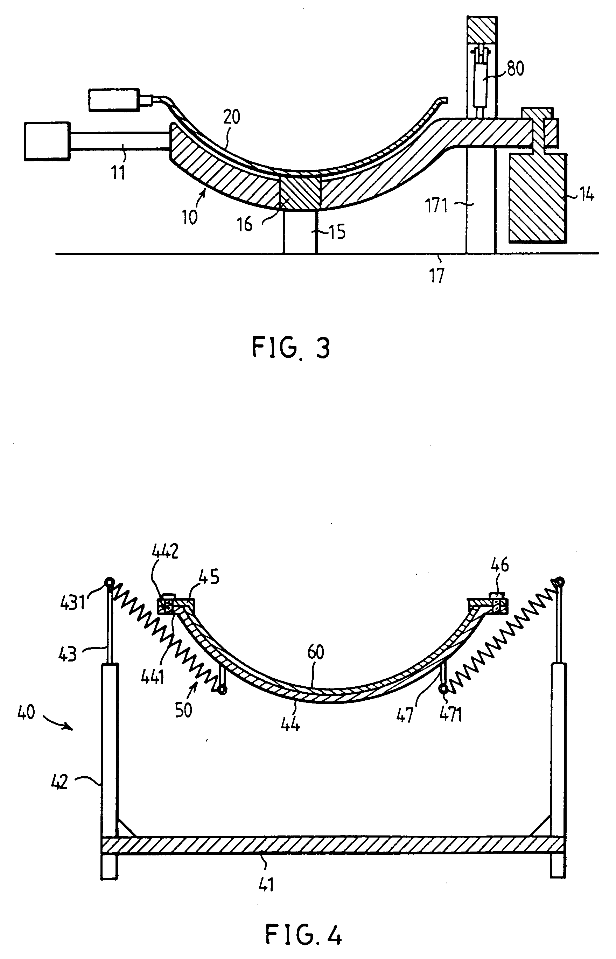

FIG. 3 shows another arrangement of the shake facilitating means 80. In the above-mentioned embodiment, the shake facilitating means 30, as shown in FIG. 1, is a recoil spring. In this arrangement, the shake facilitating mean 80 is a hydraulic mechanism.

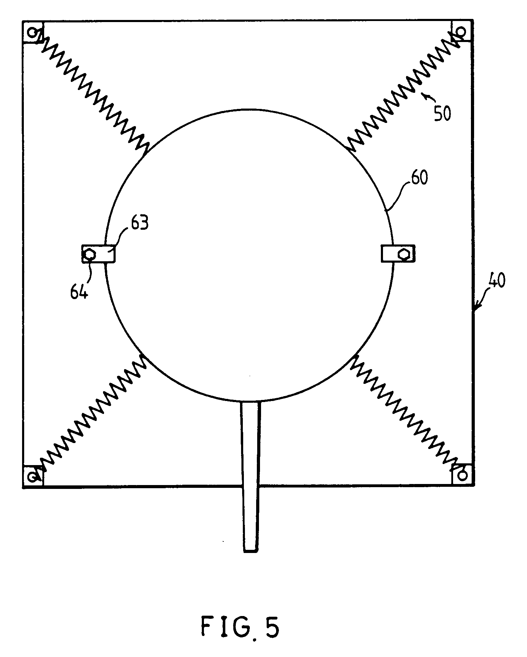

FIG. 4 shows another arrangement of the present invention. The disposing frame 40 comprises a bottom 41, a main body 44 and four side walls 42. FIG. 5 shows that the side walls 42 are quadrilaterally connected. The side walls 42 have a bottom connecting to the bottom 41 of the disposing frame 40 and a top. Four positioning posts 43, disposed on the top corners of the side walls 42, extend over the tops of the side walls 42 to terminate a positioning rings 431, respectively. The main body 44 has a bottom and two positioning arms 441, on which a threded hole 442 is respectively disposed. The main body has four positioning pins 47 extending downwards from its bottom to respectively terminate a holding ring 471. Two positioning hooks 45 and two fastners 46 are provided for rigidly connecting the wok 60 to the main body 44. The skake facilitating means 50 in this arrangement are four recoil springs that respectively have a first end connecting to the positioning ring 431 and a second end connecting to the holding ring 471. The four recoil springs 50 ensure the easy shaking of the wok 20 to toss the food stuff by their elasticity.

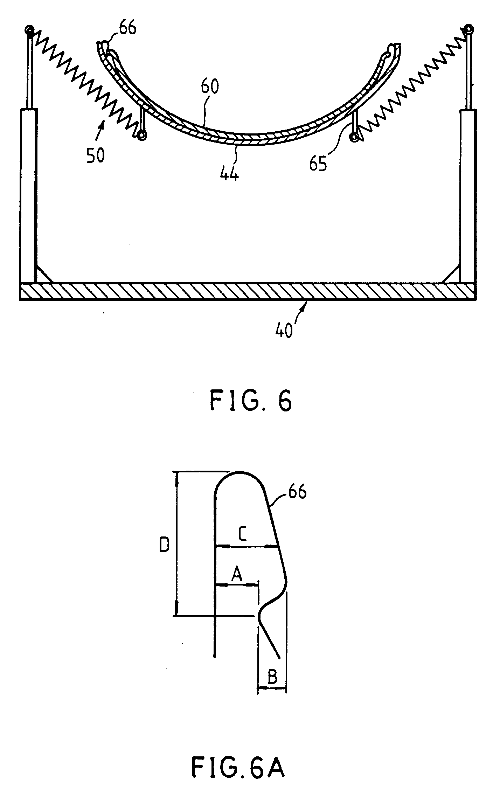

The positioning arms 441, threaded holes 442, positioning hooks 45 and fastners 46 are for connecting the wok 60 to the main body 44. FIGS. 6 and 6A show that the positioning arms 441, threaded holes 442, positioning hooks 45 and fastners 46 can be replaced with two positioning clips 66. Referring to FIG. 6, the wok 60 has a curving-down edge. The positioning clip 66, approximately "R" shaped, has four portions, namely A, B, C and D, as shown in FIG. 6A. C of the positioning clip 66 ensures a hand grip. A is greater than B, which ensures the curving edge of the wok 60 to be disposed on and positioned within. When C of the positioning clip 66 is pressed, the curving-edge of the wok 60 disengages from B of the positioning clip 66.

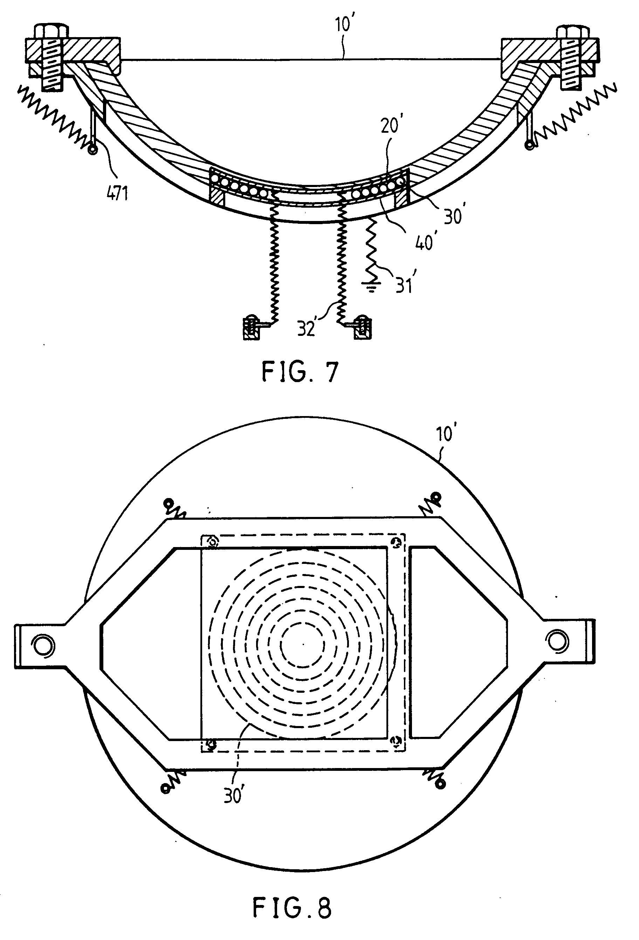

FIGS. 7 and 8 show that the wok is replaced with an electromagnetic wok 10'. The electromagnetic wok 10' comprises induction coil 30' which is wrapped with a current-insulating and heat-conductive top 20' and a current-insulating and heat-conductive bottom 40'. The induction coil 30' has a grounding wire 31' and two power wire 32' for respectively grounding and connecting to power terminals.

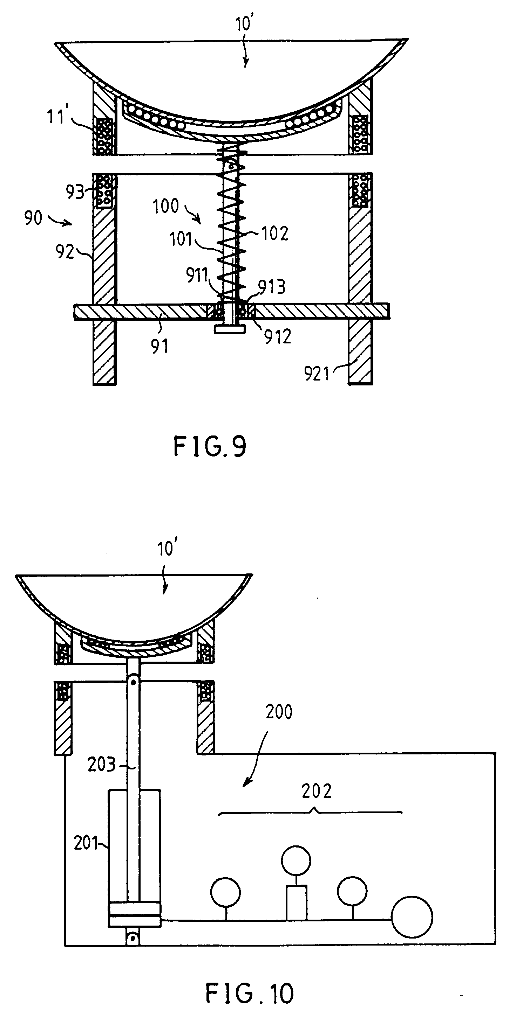

FIG. 9 shows another arrangement of the disposing frame 90 when the electromagnetic wok 10' is applied. The positioning pins 47 and holding rings 471 can be replaced with a circular magnetic ring 11'. Corresponding to the circular magnetic ring 11', the disposing frame 90 comprises a circular bottom 91 and a circular side wall 92 which has a magnetic top 93 and a bottom extending through the circular bottom 91 to terminate a circular leg 921. The shake facilitating means 100 in this embodiment comprises a central rod 101 encircled with a recoil spring 102. The bottom 91 of the disposing frame 90 has a through hole 911. A circular cushion pad 912 and a circular ball bearing 913 are disposed on the periphery of the through hole 911. The recoil spring 102 has a top end and a bottom end disposing on the bottom 91 of the disposing frame 90. The central rod 101 has a first end advancing through and being flexibly positioned within the circular cushion pad 912 and ball bearing 913, and a second end passing over the top end of the recoil spring 102. The length of the central rod 101 is greater than that of the side wall 92 and the circular magnetic ring 11'. The flexible positioning and the length of the central rod 101 and the elasticity of the recoil spring 102 are so arranged as to ensure the easy shaking of the wok 10' to toss the food stuff.

In the aforesaid embodiment, the arrangements of central rod 101, recoil spring 102, through hole 911, circular cushion pad 912 and ball bearing 913 can be replaced with a hydraulic system 200 which comprises a pump 201, a hydraulic circuit control unit 202 and a pushing rod 203, as shown in FIG. 10. With the hydraulic circuit control unit 202, the hydraulic system 200 can automatically trigger the pump 201 to move the pushing rod 203 upwards and downwards to push the wok 10' to facilitate the shaking, swaying and rocking of the wok 10' to toss the food stuff.

Further modification of the invention herein described will occur to persons skilled in the art and all such modifications are deemed to be within the scope of the invention as defined by the appended claims.

## Claims

1. An apparatus for facilitating the shaking of a wok to toss the food stuff mainly comprising a disposing frame, a wok and shake facilitating means;
said disposing frame comprising a handle portion extending to connect to a main body which curves downwards to correspond to the bottom of said wok, a balancing bar extending opposite from said metal plate which said handle portion is connected to connect to a balancing plate and a counterweight, two supporting posts having a first end extending upwards from a work bench to have a second end to connect to the bottom centers of metal plates of said main body which are adjacent to said metal plates connected with said handle portion and balancing bar, respectively; said supporting posts having two magnetic means respectively attaching to their second ends for attracting to the bottom of said wok; said balancing bar having a first end connecting to said main body and extending to have a second end to connect to said counterwight; said balancing plate having a center and two ends; between the first end and second end of said balancing bar, two struts have a first end extending upwards from said work bench over said balancing bar to connect to the ends of said balancing plate;
said shake facilitating mean being a recoil spring which has one end connecting to the center of said balancing plate, and the other end connecting to said balancing bar, whereby said recoil spring ensures the easy shaking of said wok to toss the food stuff by its elasticity.

2. An apparatus for facilitating the shaking of a wok to toss the food stuff as claimed in claim 1, wherein said shake facilitating mean being a hydraulic mechanism.

3. An apparatus for facilitating the shaking of a wok to toss the food stuff as claimed in claim 1, wherein said wok can be replaced with an electromagnetic wok comprising an induction coil wrapped with a current-insulating and heat-conductive top and a current-insulating and heat-conductive bottom, a grounding wire and two power wire for respectively grounding and connecting to power terminals.

4. An apparatus for facilitating the shaking of a wok to toss the food stuff mainly comprising a disposing frame, a wok and shake facilitating means;
said disposing frame comprising a bottom, a main body and four side walls which are quadrilaterally connected, said side walls having a bottom connecting to said bottom of said disposing frame, and a top having four positioning posts disposed thereon, said positioning posts extending over said top of said side walls to respectively terminate a positioning rings; said main body has a bottom and two positioning arms, on which a threded hole is respectively disposed, four positioning pins extending downward from said bottom of said main body to respectively terminate a holding ring; two positioning hooks and two fastners being provided for rigidly engaging said wok with said main body;
said shake facilitating mean being four recoil springs that respectively have a first end connecting to said positioning rings and a second end connecting to said holding rings, whereby said four recoil springs ensure the easy shaking of said wok to toss the food stuff by their elasticity.

5. An apparatus for facilitating the shaking of a wok to toss the food stuff as claimed in claim 4, wherein said wok can positioning arms, threaded holes, positioning hooks and fastners can be replaced with two positioning clips, approximately "R" shaped, for engaging said wok to said main body and disengaging said wok from said main body.

6. An apparatus for facilitating the shaking of a wok to toss the food stuff as claimed in claim 4, wherein said wok can be replaced with an electromagnetic wok comprising an induction coil wrapped with a current-insulating and heat-conductive top and a current-insulating and heat-conductive bottom, a grounding wire and two power wire for respectively grounding and connecting to power terminals.

7. An apparatus for facilitating the shaking of a wok to toss the food stuff mainly comprising a disposing frame, an electromagnetic wok and shake facilitating means;
said disposing frame comprising a circular bottom, a main body having a bottom, underneath which a circular magnetic ring is disposed, a circular side wall, a central rod and a recoil spring; said bottom of said disposing frame having a through hole disposed at its center; said through circular having a cushion pad and a circular ball bearing disposed on its periphery; said circular side wall having a magnetic top to correspond to and attract to said magnetic ring and a bottom extending through said circular bottom of said disposing frame to terminate a circular leg; said circular legs being disposed on a work bench;
said shake facilitating means comprising a central rod encircled with a recoil spring having a top end and a bottom end disposing on said bottom of said disposing frame; said central rod has a first end advancing through and being flexibly positioned within said circular cushion pad and said ball bearing and on said work bench, and a second end passing over said top end of said recoil spring; the length of said central rod being greater than that of said side wall and said circular magnetic ring; the flexible positioning and the length of said central rod and the elasticity of said recoil spring being so arranged as to ensure the easy shaking of said electromagnetic wok to toss the food stuff.

8. An apparatus for facilitating the shaking of a wok to toss the food stuff as claimed in claim 7, wherein said central rod, recoil spring, through hole, circular cushion pad and ball bearing can be replaced with a hydraulic system which comprises a pump, a hydraulic circuit control unit and a pushing rod; with said hydraulic circuit control unit, said hydraulic system automatically triggering said pump to move said pushing rod upwards and downwards to push said electromagnetic wok to facilitate the shaking of said electromagnetic wok to toss the food stuff.
